Europäisches Patentamt

European Patent Office

Office européen des brevets

(19)

(11) Veröffentlichungsnummer: **0 212 448
B1**

(12) **EUROPÄISCHE PATENTSCHRIFT**

(45) Veröffentlichungstag der Patentschrift:
05.07.89

(51) Int. Cl.⁴: **G01L 5/16, G01M 9/00**

(21) Anmeldenummer: 86110861.1

(22) Anmeldetag: 06.08.86

(54) Einrichtung zur Zerlegung von Vektorkräften.

(30) Priorität: 09.08.85 DE 3528727

(43) Veröffentlichungstag der Anmeldung:
04.03.87 Patentblatt 87/10

(45) Bekanntmachung des Hinweises auf die Patenterteilung:
05.07.89 Patentblatt 89/27

(84) Benannte Vertragsstaaten:
AT BE CH DE FR GB LI

(56) Entgegenhaltungen:
DE-C- 2 331 149
DE-C- 2 624 647

(73) Patentinhaber: **Pfister GmbH, Stätzlinger Strasse 70,
D-8900 Augsburg(DE)**

(72) Erfinder: **Häfner, Hans W., Fichtenweg 15,
D-8890 Aichach-Walchshofen(DE)**

(74) Vertreter: **Kahler, Kurt, Dipl.-Ing.,
Postfach 248 Gerberstrasse 3, D-8948 Mindelheim(DE)**

**Beschreibung**

Die Erfindung betrifft eine Einrichtung zur Zerlegung von Vektorkräften in ihre X-, Y- und Z- Komponenten gemäß dem Oberbegriff des Patentanspruchs 1.

Bei Einrichtungen zur Zerlegung von Vektorkräften besteht bekanntlich das Problem, eine rückwirkungsfreie Zerlegung bei hoher Genauigkeit zu erzielen, da sich die zur rückwirkungsfreien Zerlegung getroffenen Maßnahmen in Form anderer Einflüsse, etwa Reibung oder dergleichen, auf die Meßgenauigkeit auswirken. Mechanisch arbeitende Einrichtungen sind kompliziert und raumaufwendig in ihrem Aufbau. Piezo elektrische Einrichtungen sind verhältnismäßig ungenau, temperaturempfindlich und für statische Meßungen im Bereich bereits von wenigen Sekunden ungeeignet.

Eine hohe Rückwirkungsfreiheit kann mit einem hydrostatisch gelagerten Teil erzielt werden, der in Richtung seines Bewegungsfreiheitsgrades mit einem Kraftmeßelement verbunden ist. Hierbei kann jedoch immer nur eine einzige Kraftkomponente exakt gemessen werden. Ein Beispiel einer derartigen Kräftezerlegungseinrichtung ist eine Brückenwaage, bei der die Lastbrücke über dieGleitsteine auf einer als schiefe Ebene ausgebildeten Führung abgestützt ist, wobei die Gleitsteine als hydrostatisch gelagerte Keile ausgebildet sind, die mit einem Kraftmeßelement verbunden sind.(vgl. DE-PS23 31 149)

Die DE-PS 26 24 647 beschreibt eine Kräftezerlegungseinrichtung in Anwendung auf eine Windkanalwaage, bei der ein Objektträger in hydrostatischen Lagern in einer ersten Führungsanordnung in vertikaler Richtung geführt und mit einem Kraftmeßelement mit der ersten Führungsanordnung verbunden ist, wobei die erste Führungsanordnung ihrerseits in hydrostatischen Lagern in einer zweiten Führungsanordnung derart gleitend gelagert ist, daß sie Bewegungen in einer horizontalen Ebene in beliebigen Richtungen ausführen kann und über Kraftmeßelemente in zwei Richtungen in der zweiten Führungsanordnung verbunden ist, die ihrerseits mit hydrostatischen Lagern in einer dritten Führungsanordnung derart gelagert ist, daß sie eine Schwenkbewegung um den Mittelpunkt kugelförmig nach allen Richtungen ausführen kann. Die zweite Führungsanordnung ist mit Hilfe von Kraftmeßelementen in zwei annähernd senkrecht aufeinander stehenden Ebenen mit der dritten Führungsanordnung verbunden, die ortsfest angeordnet ist. Bei dieser bekannten Einrichtung wird eine ausgezeichnete Entkopplung auf Grund der verschiedenen hydrostratischen Lager erreicht und eine hohe Meßgenauigkeit erzielt. Der Aufwand ist jedoch verhältnismäßig hoch.

Die Erfindung liegt die Aufgabe zu Grunde eine Einrichtung zum Zerlegen von Vektorkräften in die X,- Y-und Z-Komponenten anzugeben, die bei sehr einfachem Aufbau eine ausgezeichnete Rückwirkungsfreiheit und eine hohe Meßgenauigkeit erreicht.

Diese Aufgabe wird gemäß der Erfindung gelöst durch eine Einrichtung mit den Merkmalen des Kennzeichens des Patentanspruchs 1.

Bevorzugte Weiterbildungen der erfindungsgemäßen Einrichtung sind in den abhängigen Ansprüchen 2–13 gekennzeichnet.

Auf Grund der horizontalen Anordnung der oberen Keilfläche, ergibt sich die überraschend einfache Möglichkeit, das darüber liegende Element zweidimensional beweglich reibungsfrei zu lagern, wobei seine Bewegungsfreiheit durch die in X- bzw. Y-Richtung wirkenden Kraftmeßelemente verhindert bzw. eng begrenzt wird.

Für die erfindungsgemäße Einrichtung ergeben sich die vielfältigsten Einsatzmöglichkeiten. Ein bevorzugtes Beispiel ist eine Windkanalwaage, wobei sowohl eine 6-Komponenten - Ausführung als auch eine 7-Komponenten - Ausführungsform möglich ist.

Weitere Merkmale und Vorteile der erfindungsgemäßen Einrichtung ergeben sich aus der folgenden Beschreibung von Ausführungsbeispielen und der Zeichnung.

Es zeigen:

Figur 1 eine Seitenansicht einer ersten Ausführungsform, der erfindungsgemäßen Einrichtung in prinzipieller Darstellung,

Figur 2 eine Draufsicht auf die Einrichtung nach Figur 1,

Figur 3 eine Seitenansicht einer zweiten Ausführungsform der erfindungsgemäßen Einrichtung in prinzipieller Darstellung,

Figur 4 eine Draufsicht auf die Einrichtung nach Figur 3,

Figur 5 eine schematische Seitenansicht einer Windkanalwaage 7-Komponenten - Ausführung unter Verwendung von erfindungsgemäßen Einrichtungen,

Figur 6 eine Draufsicht auf die Windkanalwaage nach Figur 5,

Figur 7 eine Seitenansicht einer Windkanalwaage in 6-Komponenten -Ausführung unter Verwendung von abgewandelten, erfindungsgemäßen Einrichtungen

Figur 8 eine Draufsicht auf die Windkanalwaage nach Figur 7.

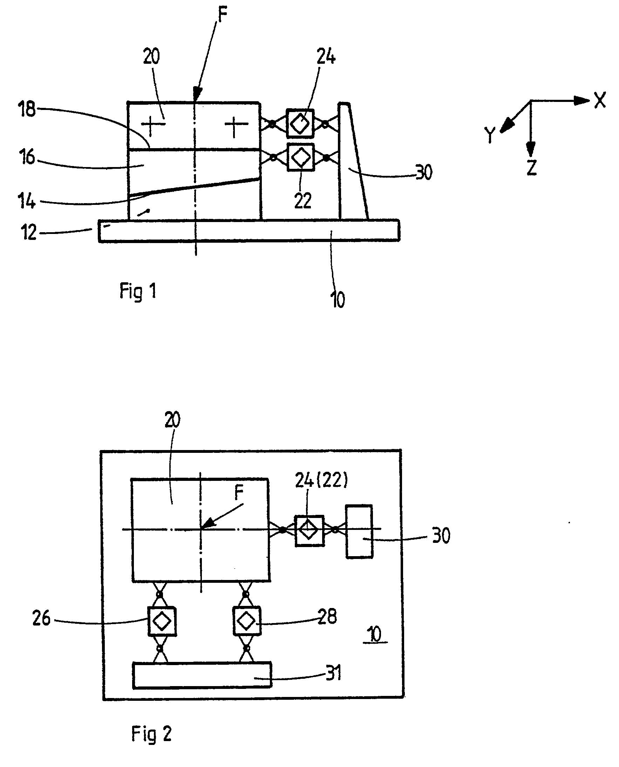

Die Figuren 1 und 2 zeigen schematisch den Aufbau einer ersten Ausführungsform einer erfindungsgemäßen Einrichtung zum Zerlegen von Vektorkräften in X-, Y- und Z- Komponenten. Die Kräftezerlegungseinrichtung ist auf einer Basis 10 aufgebaut und besteht in Übereinanderanordnung aus einem auf die Basis 10 aufgesetzten Grundkörper 12 mit einer ebenen, zur Horizontalen geneigten Fläche 14, einem mit seiner ebenfalls gegenüber der Horizontalen geneigten Unterseite hydrostatisch auf der Fläche 14 reibungsfrei gelagerten Keil 16, auf dessen ebener horizontaler Oberseite 18 unter Zwischenschaltung eines bekannten, nicht gezeigten hydrostatischen Lagers ein oberes Element 20 aufliegt, das beispielsweise die Form einer planparallelen Platte haben kann. Das obere Element 20 ist entweder selbst der Krafteinleitungskörper oder es steht mit einem solchen in Verbindung.

Dieser turmartig Aufbau der Kraftzerlegungseinrichtung wird insbesondere durch Kraftmeßelemente 22, 24, 26 und 28 in Position gehalten, die sich gegen Halterungen 30, 31 oder dergleichen, die an der Basis 10 angebracht sind, abstützen.

Die Kraftmeßelemente arbeiten bevorzugt in beiden Richtungen. Es besteht jedoch auch die Möglichkeit den gezeigten Kraftmeßelementen 22 jeweils gegenüberliegend je ein weiteres Kraftmeßelement anzuordnen oder stattdessen an diesen Stellen eine Vorbelastung vorzusehen, wenn nur in einer Richtung wirkende Kraftmeßelemente verwendet werden. Als Beispiele für die Kraftmeßelemente 22, 24, 26, 28 kommen Scherkraft - Dehnungsmeßstreifenelemente oder piezoresistive Kraftmeßelemente oder jedes beliebige andere geeignete Kraftmeßelement in Frage.

Das Kraftmeßelement 22, das mit dem Keil 16 verbunden ist, stellt mit entsprechender Untersetzung auf Grund der Keilwirkung die Z-Komponente der auf das obere Element 20 ausgeübten Kraft fest. Die Kraftmeßelemente 24, 26 und 28 sind mit dem oberen Element 20 verbunden, wobei das Kraftmeßelement 24 die Kraftkomponente in X-Richtung und die beiden Kraftmeßelemente 26 und 28 die Kraftkomponente in Y-Richtung feststellen. Durch Verwendung von zwei Kraftmeßelementen 26, 28 in einer der beiden horizontalen Richtungen wird das obere Element 20 eindeutig festgelegt und ein Verkanten verhindert. Im Prinzip würde auch ein Kraftmeßelement ausreichen.

Es sei darauf hingewiesen, daß die Oberseite des oberen Elements 20 je nach Verwendungsmöglichkeit ausgestaltet sein kann. Die Elemente 12, 16, 20 bestehen vorzugsweise aus Metall obwohl in manchen Anwendungsfällen auch Kunststoff einsetzbar ist. Das Prinzip derhydrostatischen Lagerung des Keiles ist beispielsweise aus der genannten DE-PS 23 31 149 bekannt und wird deshalb hier nicht weiter beschrieben.

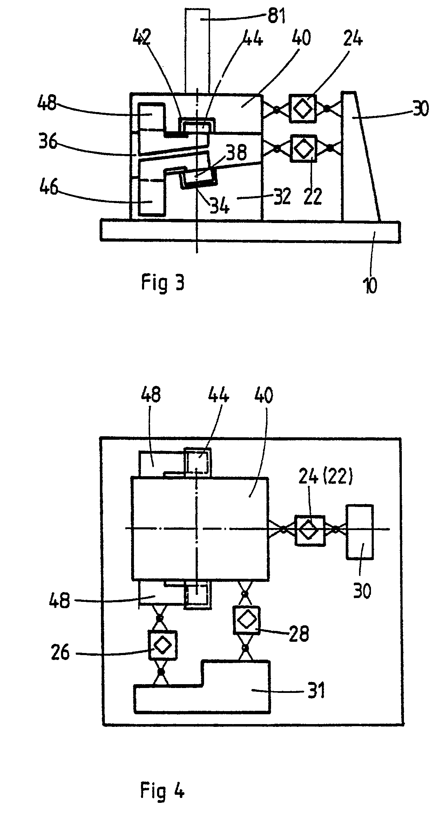

Die Figuren 3 und 4 zeigen eine zweite Ausführungsform der erfindungsgemäßen Einrichtung, die nach dem gleichen Prinzip aufgebaut ist wie die Ausführungsform nach den Figuren 1 und 2, wobei jedoch Maßnahmen getroffen sind, um ein Aufkippen des oberen Elements 40 der Anordnung zu verhindern, wie es beispielsweise auftreten kann, wenn auf dem oberen Element 40 über einen Stiel ein Objekt angebracht ist, das einem strömenden Medium ausgesetzt ist.

In Abwandlung zur Ausführungsform nach den Figuren 1 und 2 ist ein Grundkörper 32 an seiner Oberseite mit einer durchgehenden, quer zum Keil 36 verlaufenden Vertiefung 34, beispielsweise mit rechteckigem Querschnitt versehen, in die eine Querleiste 38 paßt, die an der Unterseite des Keils 36 angebracht ist und über diesen seitlich vorsteht (vgl. Figur 4). Eine ähnliche Querleiste 44 ist an der Oberseite des Keils 36 in einer Vertiefung 42 an der Unterseite des oberen Elements 40 vorgesehen.

Die beiden Leisten 38 und 44 werden von seitlich am Grundkörper 32 bzw. am oberen Element 40 angebrachten Haken 46 bzw. 48 hintergriffen. Sie liegen dabei über hydrostatische Lager an der oberen bzw. unteren Seite der Querleiste 38 bzw. 44 an, so daß eine seitliche Bewegung des Keiles 36 bzw. des oberen Elements 40 reibungsfrei gewährleistet ist, während ein Aufkippen dieser beiden Elemente verhindert wird.

Es sei bemerkt, daß die vorstehend beschriebene Kippsicherung lediglich eine bevorzugte Ausführungsform darstellt und daß eine Kippsicherung auch mittels anderer Ausführungsformen erzielbar ist.

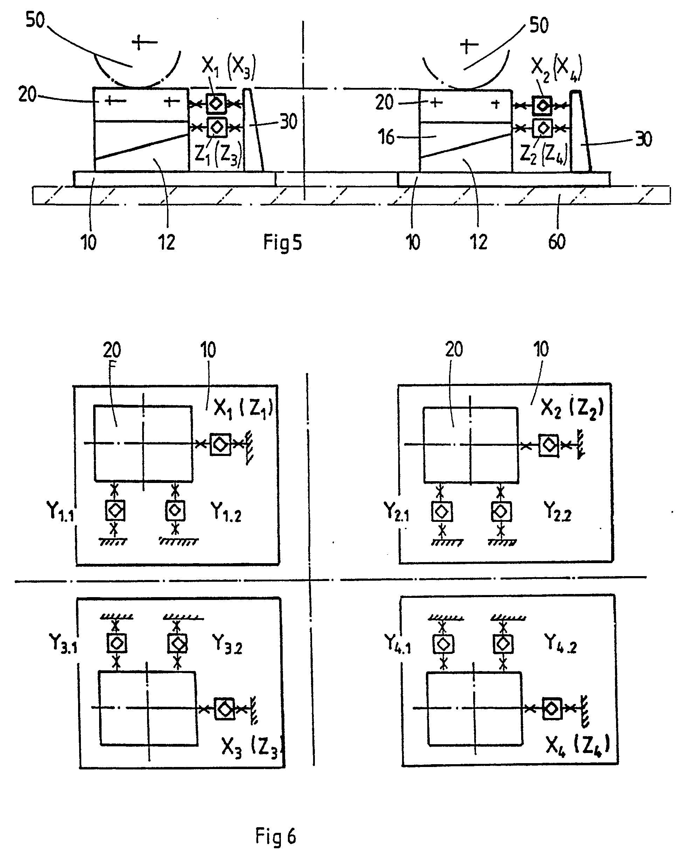

Die Figuren 5 und 6 zeigen die Anwendung einer erfindungsgemäßen Kraftzerlegungseinrichtung auf eine 7-Komponenten - Windkanalwaage, die zur Prüfung von Kraftfahrzeugen geeignet ist. Hierbei sind auf einem horizontalen Drehtisch, vorzugsweise zweidimensional verschiebbar vier Kraftzerlegungseinrichtungen etwa nach Figur 1 und 2 angeordnet (vgl. Figur 6), wobei deren obere Elemente 20 als Krafteinleitungskörper dienen,auf denen die Fahrzeugräder 50 eines zu prüfenden Fahrzeugs aufstehen (vgl. Figur 5). Auf Grund der zweidimensionalen Verschiebbarkeit auf der Drehscheibe können die Kraftzerlegungseinrichtungen auf den entsprechenden Spur- und Radabstand auf sehr einfache Weise eingestellt werden.

Die über die Kraftmeßelemente der einzelnen Kraftzerlegungseinrichtung festgestellten Kraftkomponenten in der X-, Y- und Z- Richtung werden in bekannter Weise rechnerisch ausgewertet.

Da die Kraftzerlegungseinrichtungen auf der Drehscheibe verschiebbar sind, ergibt sich eine besonders einfach aufgebaute Windkanalwaage. Im Vergleich dazu sind bekannte Windkanalwaagen äußerst kompliziert, was insbesondere auf verstellbare Krafteinleitungselemente bei starr angeordneten Kraftzerlegungseinheiten zurückzuführen ist.

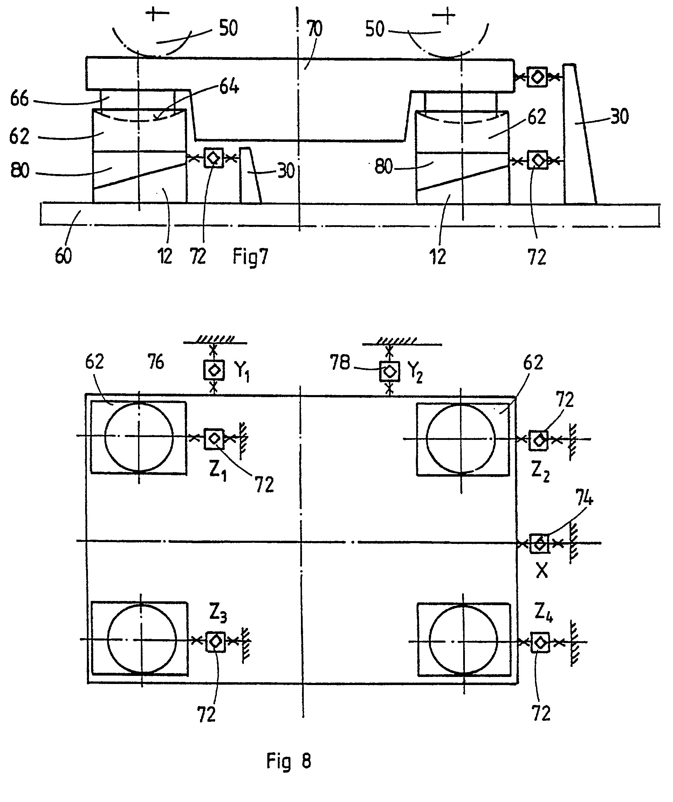

Die Figuren 7 und 8 zeigen eine 6-Komponenten - Windkanalwaage, bei der erfindungsgemäße Kraftzerlegungseinheiten Verwendung finden. Hierbei sind wiederum auf einer biegesteifen Drehscheibe 60 4 erfindungsgemäße Kraftzerlegungseinrichtungen angeordnet, die in diesem Falle fest auf der Drehscheibe 60 angeordnet sein können. Die oberen Elemente 62 der Kraftzerlegungseinheiten besitzen an ihrer Oberseite eine vorzugsweise kugelkalottenförmige Vertiefung 64. Eine Plattform 70, auf die ein Fahrzeug mit Rädern 50 stellbar ist, besitzt an ihrer Unterseite Ansätze 66, die nach unten hin kugelkalottenförmig gewölbt sind und in die Vertiefungen 64 passen. Die Plattform 70 wird auf die vier Kraftzerlegungseinrichtungen aufgesetzt und ist auf Grund hydrostatischer Lager zwischen den Ansätzen 66 und den oberen Elementen 62 reibungsfrei gelagert. Die horizontalen Kraftmeßelemente 74 für die X-Richtung bzw. 76 und 78 für die Y-Richtung sind für die vier Kraftzerlegungseinrichtungen nur einmal vorgesehen und greifen an der Plattform 70 seitlich an. Lediglich in Z- Richtung ist für jede Kraftzerlegungseinrichtung ein Kraftmeßelement 72 vorgesehen, die mit ihren zugehörigen Keilen 80 verbunden sind.

Auch diese 6-Komponenten - Windkanalwaage zeichnet sich gegenüber bekannten Einrichtungen durch ihre besondere Einfachheit aus. Auf eine detaillierte Beschreibung der Wirkungsweise der Windkanalwaagen wird verzichtet, da diese dem Fachmann bekannt sind. Es sei lediglich darauf hingewiesen, daß sich auf Grund der hochgradigen Entkopplung der Kraftkomponenten in den Koordinateneinrichtungen die Auswertung der von den

KraftmeBelementen abgegebenen Werte erheblich vereinfacht.

Obwohl der Einsatz von erfindungsgemäßen Kräftezerlegungseinrichtungen an Hand von Windkanalwaagen beschrieben wurde, ist darauf hinzuweisen, daß die erfindungsgemäßen Einrichtungen vielfältige Verwendung finden können, und zwar überall dort wo eine Kräftezerlegung mit hoher Genauigkeit und guter Entkopplung benötigt wird.

Beim Testen von Flugzeugmodellen oder dergleichen kann auf der Oberseite des oberen Elements 40 gemäß Figur 3 ein Stiel 80 aufgesetzt sein, an dessen oberen Ende das Meßobjekt angebracht wird.

## Patentansprüche

1. Einrichtung zur Zerlegung von Vektorkräften in ihre X- und/oder Y-Komponente und ihre Z-Komponente mittels KraftmeBelementen, deren Krafteinleitungsglieder voneinander durch hydrostatische Lagerung entkoppelt sind, gekennzeichnet durch einen Grundkörper (12; 32), der an seiner Oberseite eine gegenüber der Horizontalen geneigte ebene Fläche (14) besitzt, einen Keil (16; 36; 80), der mit seiner Unterseite auf der Fläche (14) hydrostatisch gelagert ist und dessen Oberseite durch eine horizontal verlaufende ebene Fläche gebildet wird und der mit einem in Keilrichtung wirkenden KraftmeBelement (22; 72) verbunden ist, das in fester Beziehung zu dem Grundkörper (12) angeordnet ist, einem oberen Element (20; 40; 62), dessen Unterseite als ebene Fläche ausgebildet ist, die auf der horizontalen Fläche (18) des Keils (16) in horizontalen Richtungen frei beweglich hydrostatisch gelagert ist, jedoch in ihrer Bewegung durch in der X-Richtung und/oder in der Y-Richtung wirkende KraftmeBelemente (24, 26, 28; 74, 76, 78) begrenzt ist, die in fester Beziehung zu dem Grundkörper (12; 32) angeordnet sind.

2. Einrichtung nach Anspruch 1 dadurch gekennzeichnet, daß der Grundkörper (12; 32) auf einer Basis (10; 60) angeordnet ist, auf der Haltevorrichtungen (30, 31) für die KraftmeBelemente (22, 24, 26, 28; 72, 74, 76, 78) angebracht sind.

3. Einrichtung nach Anspruch 1 oder 2, dadurch gekennzeichnet, daß der Grundkörper (12), der Keil (16) und das obere Element (20) durch eine Aufkippverhinderungsvorrichtung (38, 44, 46, 48) reibungsfrei verbunden sind.

4. Einrichtung nach einem der Ansprüche 1-3, dadurch gekennzeichnet, daß in X- und Y-Richtung je ein KraftmeBelement oder je zwei KraftmeBelemente (24, 26, 28; 74, 76, 78) angeordnet sind.

5. Einrichtung nach einem der Ansprüche 1-3, dadurch gekennzeichnet, daß in einer horizontalen Richtung ein KraftmeBelement (24; 74) und in der anderen horizontalen Richtung zwei KraftmeBelemente (26, 28; 76, 78) angeordnet sind.

6. Einrichtung nach einem der vorhergehenden Ansprüche, dadurch gekennzeichnet, daß bei mehreren KraftmeBelementen für eine horizontale Richtung diese auf der gleichen Seite des oberen Elements (20; 70) oder zumindest zum Teil an gegenüberliegenden Seiten des oberen Elements (20; 40; 70) angeordnet sind.

7. Einrichtung nach einem der vorhergehenden Ansprüche, dadurch gekennzeichnet, daß am oberen Element (20; 40, 70) eine das jeweilige KraftmeBelement beaufschlagende Vorlast angreift.

8. Einrichtung nach einem der Ansprüche 3–7, dadurch gekennzeichnet, daß die Kippinverhinderungsvorrichtung aus am Grundkörper (32) und am oberen Element (40) angebrachten hakenförmigen Armen bestehen, die am Keil (36) angebrachte Ansätze (38, 44) mit hydrostatisch gelagerter Anlage hintergreifen.

9. 7-Komponenten - Windkanalwaage, dadurch gekennzeichnet, daß Einrichtungen der vorhergehenden Ansprüche in Positionen angebracht sind, die den Auflagepunkten eines zu vermessenden Kraftfahrzeugs entsprechen und vier verschiebbar auf einer Drehplattform angeordnete Kraftzerlegungseinrichtungen aufweist.

10. Windkanalwaage nach Anspruch 9, dadurch gekennzeichnet, daß die Kraftzerlegungseinrichtungen in zwei horizontalen Richtungen verschiebbar sind.

11. 6-Komponenten-Windkanalwaage, dadurch gekennzeichnet, daß vier Kraftzerlegungseinrichtungen nach einem der Ansprüche 1 bis 9 in Abstand zueinander auf einer Drehscheibe (60) angeordnet sind, wobei deren obere Elemente (62) gemeinsam eine Plattform (70) tragen.

12. Windkanalwaage nach Anspruch 11, dadurch gekennzeichnet, daß die Plattform (70) über hydrostatische Kalottenlager auf die oberen Elemente (40) aufgesetzt ist.

13. Windkanalwaage nach einem Anspruch 11 oder 12, dadurch gekennzeichnet, daß die in horizontaler Richtung wirkenden KraftmeBelemente (74, 76, 78) an der Plattform (70) angreifen.

## Revendications

1. Dispositif pour décomposer des forces vectorielles en leurs composantes X et/ou Y et leur composante Z au moyen d'éléments dynamométriques dont les éléments d'introduction des forces sont découplés par appuis hydrostatiques, caractérisé par un corps de base (12; 32), qui possède à sa partie supérieure une surface plane inclinée par rapport à l'horizontale (14), une pièce en forme de coin (16; 36; 80) qui est à appui hydrostatique par sa partie inférieure sur la surface (14) et dont la partie supérieure est formée par une surface plane horizontale, et qui est reliée à un élément dynamométrique (22; 72) agissant dans la direction de la pièce en forme de coin, et agencé à relation fixe par rapport au corps de base (12), un élément supérieur (20; 40; 62) dont la partie inférieure est configurée comme une surface plane qui est supportée à mouvement hydrostatique libre dans les directions horizontales, sur la surface horizontale (18) de la pièce en forme de coin (16), mais dont le mouvement est limité par des éléments dynamométriques (24, 26, 28; 74, 76, 78) agissant dans la direction X et/ou dans la direction Y, éléments qui sont disposés en relation fixe par rapport au corps de base (12; 32).

2. Dispositif selon la revendication 1 caractérisé en ce que le corps de base (12; 32) est agencé sur une base (10; 60), sur laquelle sont disposés des dispositifs d'arrêt (30, 31) pour les éléments dynamométriques (22, 24, 26, 28; 72, 74, 76, 78).

3. Dispositif selon la revendication 1 ou 2, caractérisé en ce que le corps de base (12), la pièce en forme de coin (16) et l'élément supérieur (20) sont reliés sans friction par un dispositif antibasculement (38, 44, 46, 48).

4. Dispositif selon une des revendications 1 à 3, caractérisé en ce qu'un élément dynamométrique ou deux éléments dynamométriques (24, 26, 28; 74, 76, 78) sont chaque fois prévus dans la direction X et dans la direction Y.

5. Dispositif selon une des revendications 1 à 3, caractérisé en ce qu'un élément dynamométrique (24; 74) est disposé dans une direction horizontale et deux éléments dynamométriques (26, 28; 76, 78) sont disposés dans l'autre direction horizontale.

6. Dispositif selon une des revendications qui précèdent, caractérisé en ce que, pour plusieurs éléments dynamométriques pour une direction horizontale, ceux-ci sont disposés sur la même face de l'élément supérieur (20; 70) ou au moins en partie sur des faces opposées de l'élément supérieur (20; 40; 70).

7. Dispositif selon une des revendications qui précèdent, caractérisé en ce qu'une précontrainte sollicitant l'élément dynamométrique correspondant, agit sur l'élément supérieur (20; 40, 70).

8. Dispositif selon une des revendications 3 à 7, caractérisé en ce que les dispositifs anti-basculement consistent en bras en forme de crochet disposés sur le corps de base (32) et sur l'élément supérieur (40), qui agissent sur des saillies (38, 44) disposées sur la pièce en forme de coin (36) avec un dispositif à appuis hydrostatiques.

9. Bascule de soufflerie à sept composantes, caractérisée en ce que des dispositifs selon les revendications qui précèdent sont amenés dans des positions qui correspondent aux points d'appui d'un véhicule faisant l'objet de la mesure et présentent quatre dispositifs de décomposition des forces disposés de manière ajustable sur une plate-forme tournante.

10. Bascule de soufflerie selon la revendication 9, caractérisée en ce que les dispositifs de décomposition des forces sont ajustables dans deux directions horizontales.

11. Bascule de soufflerie à six composantes, caractérisée en ce que quatre dispositifs de décomposition des forces selon une des revendications 1 à 9 sont disposés à distance l'une de l'autre sur un plateau tournant (60), leurs éléments supérieurs (62) portant ensemble une plate-forme (70).

12. Bascule de soufflerie selon la revendication 11, caractérisée en ce que la plate-forme (70) s'appuie sur les éléments supérieurs (40) via des appuis à calotte hydrostatiques.

13. Bascule de soufflerie selon une des revendications 11 ou 12, caractérisé en ce que les éléments dynamométriques agissant dans la direction horizontale (74, 76, 78) agissent sur la plate-forme (70).

## Claims

1. Device for dividing vector forces into their X- and/or Y-component(s) and their Z-component by means of force measuring elements force introduction members of which are decoupled from each other by hydrostatic bearing means, characterized by a main body (12; 32) the top side of which being provided with a plane surface (14) inclined to the horizontal,
a wedge (16; 36; 80) having its bottom side hydrostatically supported on the surface (14) and having its top side formed by a horizontally extending plane surface and being connected to a force measuring element (22; 72) acting in the direction of the wedge and arranged in a fixed relationship to the main body (12),
an upper element (20; 40; 62) the bottom side of which being formed as a plane surface hydrostatically supported on the horizontal surface (18) of the wedge (16) freely movable in horizontal directions which movement, however, is limited by force measuring elements (24, 26, 28; 74, 76, 78) acting in the X-direction and/or in the Y-direction and being arranged in a fixed relationship to the main body (12; 32).

2. Device of claim 1, wherein the main body (12; 32) is arranged on a base (10; 60) having attached thereto supporting means (30, 31) for the force measuring elements (22, 24, 26, 28; 72, 74, 76, 78).

3. Device of claim 1 or 2, wherein the main body (12), the wedge (16) and the upper element (20) are connected frictionfree by a tilting preventing means (38, 44, 46, 48).

4. Device of any of the claims 1–3, wherein one force measuring element each or two force measuring elements (24, 26, 28; 74, 76, 78) each are arranged in X- and Y- directions.

5. Device of any of the claims 1–3, wherein one force measuring element (24; 74) is arranged in one horizontal direction and two force measuring elements (26, 28; 76, 78) are arranged in the other horizontal direction.

6. Device of any of the preceding claims, wherein with several force measuring elements for one horizontal direction these are arranged on the same side of the upper element (20; 70) or at least partially at opposite sides of the upper element (20; 40; 70).

7. Device of any of the predecing claims, wherein a bias load acting onto the associated force element acts upon the upper element (20; 40; 70).

8. Device of any of the claims 3–7, wherein the tilting preventing means comprise hooklike arms provided at the main body (32) and the upper element (40) and engaging behind projections (38, 44) provided at the wedge (36) with hydrostatically supported engagement.

9. 7-components wind tunnel force measuring apparatus characterized in that devices according to the preceding claims are provided in positions corresponding to supporting points of a vehicle to be measured and that on a turn-table four force dividing devices are shiftably arranged.

10. Wind tunnel force measuring apparatus of claim 9, wherein the force dividing devices are shiftable in two horizontal directions.

11. 6-components wind tunnel force measuring apparatus, characterized in that four force dividing devices according to any of the claims 1 to 9 are spacedly arranged on a turn-table (60) the upper elements (62) of which commonly supporting a platform (70).

12. Wind tunnel force measuring apparatus of claim 11, wherein the platform (70) is placed onto the upper elements (40) by means of hydrostatic cup-type bearings.

13. Wind tunnel force measuring apparatus of claim 11 or 12, wherein the force measuring elements (74, 76, 78) acting in horizontal direction act at the platform (70).

Fig 1

Fig 2

Fig 3

Fig 4

Fig 5

Fig 6

Fig 7

Fig 8